# EUROPEAN PATENT SPECIFICATION

(11) **EP 1 912 546 B1**
(45) Date of publication and mention of the grant of the patent: **23.02.2011**
(21) Application number: 06761852.0
(22) Date of filing: 11.08.2006
(51) Int. Cl.: A47J 41/00, A47G 19/14

(54) **VACUUM JUG**
VAKUUMKANNE
PICHET ISOTHERME

(30) Priority: 12.08.2005 DK 200501132
(43) Date of publication of application: 23.04.2008
(73) Proprietor: Storper, Lars Ingerslev, 7500 Holsterbro (DK)
(72) Inventor: Storper, Lars Ingerslev, 7500 Holsterbro (DK)
(74) Representative: Høiberg A/S
(86) International application number: PCT/DK2006/000441
(87) International publication number: WO 2007/048407

(56) References cited:
- DE-A1- 4 430 715
- DE-A1- 10 121 444
- DE-U1- 20 114 456
- PATENT ABSTRACTS OF JAPAN vol. 005, no. 64 <P059> 30 April 1981 & JP 56 016 819 A (OKAZAKI YUTAKA) 18 February 1981
- PATENT ABSTRACTS OF JAPAN vol. 005, no. 42 <P053> 20 March 1981 & JP 55 164 314 A (OKAZAKI YUTAKA) 22 December 1980

## Description

This invention concerns a container for fluid fx. thermo jugs for coffee, tea and other containers.

The invention is characterized in the way that the container changes form concerning how much fluid is in the container. In the rest of this application the word "container" represents all kind of thermo jugs and other opaque containers.

RODRIGUEZ KIMBERLY J (US); RODRIGUEZ JIMMY (US) i US5447248 describe a thermo jug with a level indicator made of a glass pipe, which is connected in the top and the bottom to the rest of the container. The fluid level can be read on the outside of the container.

GB2332522 O'NEILL ROBERT ANDREW is another typical invention with at level indication made by a glass cylinder connected with the el kettle.

DE 201 14 456 U1 discloses an arrangement for measuring and displaying the fluid level of a thermo jug by use of hydraulic weighting means.

DE 101 21 444 A1 discloses a hot drink container, with associated temperature sensor and display, that measures the temperature of the fluid in the container by way of measuring the gas temperature above the fluid.

DE 44 30 715 A1 discloses a jug with a content indicator based on a conventional weight that is build into the bottom of the jug.

### BACKGROUND OF THE INVENTION

When we need isolation characteristics to be used to keep fluids hot or cold in a container, the isolation characteristic become worse if the fluids connect with a non isolated glass pipe situated on the outside of the container used for fluid level indication.

A "bypass" glasspipe makes it difficult to conduct proper cleaning and increases the danger of bacteria. This aspect can be disastrous when the container is use to contain drinking fluid, medicine, specimen, etc.

A small scale on a glass pipe can also be difficult to read from some distances.

A bypass construction will also make the container weaker for bumps and also less suited to contain fluids under pressure. And with this kind of construction it will necessary have at point of assemble between the pipe and the container. This could be a potential point of a leak.

### PURPOSE OF THE INVENTION

The purpose of this invention is to present a solution that makes it visually possible to see from a distance how must fluid there is in the container.

It is a well known problem with coffee and tea thermo jugs, that guests and waiters lift and shakes the jugs in the process of detecting how much remains in the jug. It will be a big improvement if the amount of fluid could be read from a distance just with a short glance.

### SUMMARY OF THE INVENTION

The present invention is using the elementary principle that a containers weight varies with the amount of fluid the container is containing. This observation is used in the present invention to show the amount of fluid in the container by a simple weight measurement of the container.

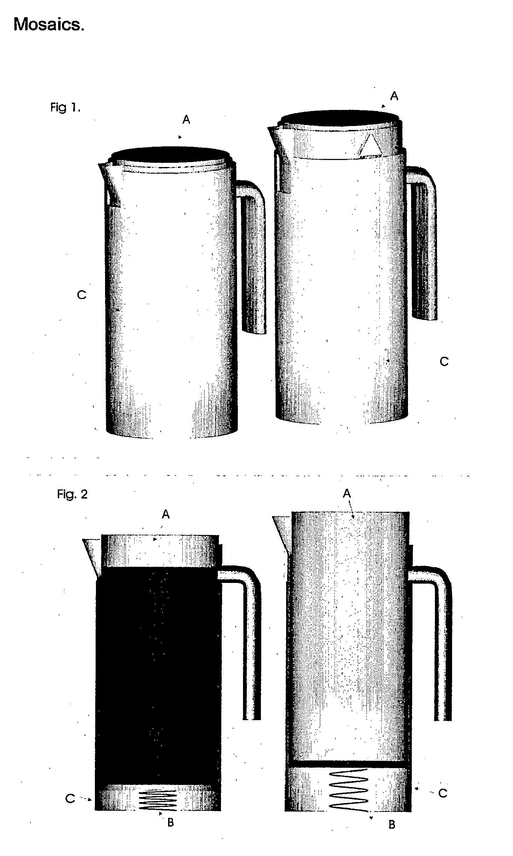

The container/jug is placed on or hung one or more springs (fig. 2.B.) or other material with the same elastic characteristic.

The indicator of the fluid level is achieved by the inner containers position read in comparison to the outer container. (Fig. 1C.). As the container/jug is emptied, the weight decreases and the inner container will get a higher rest position and a further bigger part of the inner container (indicator) will be visible.

Fig. 1 and 2 (left container) illustrate a jug filled with coffee (fluid). The spring is calibrated in a way that the inner container (A) has a rest position, where it is nearly invisible and covered by the outer container (C).

Fig. 1 and 2 (right container) illustrate a jug that is nearly empty. The inner container now has a considerable lesser weight and a high rest position. It gives a visual effect indicating the amount of fluid in the jug and it will be possible to make that estimate at a distance.

The inner container position at full capacity can be marked on a scale on the outer container and so on for ¾ ½ and empty.

As the jug empties the weight gets lesser and the container will get a rest level on a higher position and a rising part of the indicator will be visible. A scale is not necessary, because the form of the jug/container changes depending on how much fluid the jug holds.

There are lots of possibilities to increase the visible effect using contrast color and design concepts.

### AN ALTERNATIVE DESIGN.

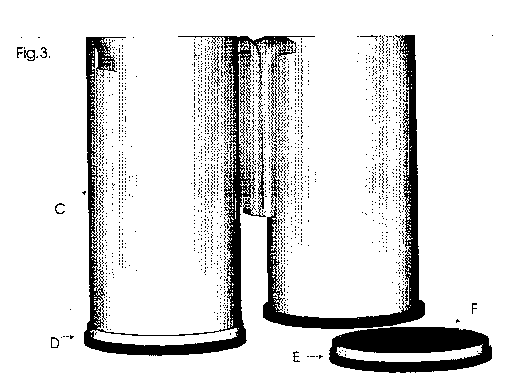

Another design of the invention could be an "add-on" version (fig. 3). In this case, a unit could be placed under existing jugs and alike. The unit could be developed to specifics and popular models and could be prepared for permanent mounting on the thermo jugs. If this design version should be used to all types of thermo jugs, it must be able to calibrate the unit.

### ADVANTAGES

The advantages of the invention are the possibility from a distance to determine how much fluid the container/jug contains without shaking/lifting the jug, because the container/jug is changing form depending on how much fluid its contain. The situation is well known with coffee and tee jugs, where people always ask "is there more coffee in the jug?". The invention will be a great advantage in catering, restaurants and hotel branchs. It will be a time saver for the waitress to be able to spot the jugs fluid level from a distance.

## Claims

1. Container/jug with a fluid level indication **characterized** that the container is movable in proportion to an exterior/outer container (A) depending of the weight of the inner container (C), and the indication is made visual by a weight based movement / change of the containers/ thermojug appearance as the container empties.

2. The container of claim 1 **characterized by** the container are mounted on elastic parts, so there will be a movement as the inner containers (A) empties / weight decreases.

3. The container of claim 1 **characterized by** the container is mounted on a springy / elastic construction - it can be a push or pull type, as long as it delivers the linear movement of the inner container (A) as it empties / the weight fluctuate.

4. The container of claim 1 and 3 **characterized by**, the weight based movement of the container can be used to register the level of fluid by reading a scale or to visually establish the inner containers (A) position against the outer.

5. The container of claim 1-5 **characterized by**, that the indication can be made in the way that the top of the jug raises over in time as the thermo jug is emptied and the top of the thermo jug will in this way indicate "empty" in a "high position" and "full" in a "low position".

6. The container of claim 1-5 **characterized by**, that the indications are shown in the bottom or other places on the jug, where it is possible to show the inner containers (A) position in relation to the outer container (C) or "rack".

## Patentansprüche

1. Behälter/Kanne mit Flüssigkeitsstandanzeige, **dadurch gekennzeichnet, dass** der Behälter im Verhältnis zu einem äußeren/Außenbehälter (A) abhängig von dem Gewicht des Innenbehälters (C) beweglich ist, und die Anzeige durch eine auf dem Gewicht basierende Bewegung/Änderung der Erscheinung des Behälters/der Thermoskanne, während sich der Behälter leert, sichtbar wird.

2. Behälter nach Anspruch 1, **dadurch gekennzeichnet, dass** der Behälter auf elastischen Teilen angebracht ist, so dass eine Bewegung auftritt, wenn sich der Innenbehälter (A) leert/das Gewicht abnimmt.

3. Behälter nach Anspruch 1, **dadurch gekennzeichnet, dass** der Behälter auf einer federnden/elastischen Konstruktion angebracht ist - diese kann eine Drück- oder Zugkonstruktion sein, solange sie die lineare Bewegung des Innenbehälters (A) vorsieht, wenn sich dieser leert/das Gewicht schwankt.

4. Behälter nach Anspruch 1 und 3, **dadurch gekennzeichnet, dass** die auf Gewicht basierende Bewegung des Behälters verwendet werden kann, um den Flüssigkeitsstand anzuzeigen, indem eine Skala abgelesen wird, oder um die Position des Innenbehälters (A) gegenüber des Äußeren sichtbar zu machen.

5. Behälter nach den Ansprüchen 1-5, **dadurch gekennzeichnet, dass** die Anzeige derart erfolgen kann, dass der obere Teil der Kanne im Laufe der Zeit nach oben steigt, während die Thermoskanne geleert wird, und der obere Teil der Thermoskanne auf diese Weise in einer "hohen Position" "leer" und in einer "tiefen Position" "voll" anzeigt.

6. Behälter nach den Ansprüchen 1-5, **dadurch gekennzeichnet, dass** die Anzeigen im unteren Teil oder an anderen Stellen der Kanne angezeigt sind, an denen es möglich ist, die Position des Innenbehälters (A) in Bezug auf den äußeren Behälter (C) oder "Ständer" anzuzeigen.

## Revendications

1. Récipient/pichet avec indication du niveau de fluide **caractérisé en ce que** le récipient est mobile par rapport à un récipient extérieur/externe (A) en fonction du poids du récipient interne (C) et l'indication est visualisable par un mouvement/ changement basé sur le poids de l'apparence des récipients/du thermos à mesure que le récipient se vide.

2. Récipient selon la revendication 1, **caractérisé en ce que** les récipients sont montés sur des pièces élastiques, de sorte qu'un mouvement se crée lorsque le récipient interne (A) se vide/le poids du récipient interne (A) diminue.

3. Récipient selon la revendication 1, **caractérisé en ce que** le récipient est monté sur une construction élastique/à ressorts, de type à poussée ou à traction, qui délivre le mouvement linéaire du récipient interne (A) à mesure que celui-ci se vide/que son poids varie.

4. Récipient selon les revendications 1 et 3, **caractérisé en ce que** le mouvement basé sur le poids du récipient peut être utilisé pour marquer le niveau de fluide en lissant une échelle ou pour déterminer visuellement la position du récipient interne (A) par rapport à la position du récipient externe.

5. Récipient selon les revendications 1 à 4, **caractérisé en ce que** l'indication peut être réalisée par le fait que la partie supérieure du pichet s'élève progressivement à mesure que le thermos se vide, la partie supérieure du thermos indiquant ainsi « vide » dans une « position haute » et « plein » dans une « position basse ».

6. Récipient selon les revendications 1 à 5, **caractérisé en ce que** les indications sont visibles dans la partie inférieure ou d'autres parties du pichet, où il est possible de représenter la position du récipient interne (A) par rapport à la position du récipient externe (C) ou « support ».
